# EUROPEAN PATENT SPECIFICATION

(11) **EP 2 211 283 B1**
(45) Date of publication and mention of the grant of the patent: **10.07.2019**
(21) Application number: 08830082.7
(22) Date of filing: 04.09.2008
(51) Int. Cl.: G06F 17/50, D04B 35/00, G06T 19/00, D04B 37/02

(54) **KNITTING DESIGN DEVICE, KINTTING DESIGN METHOD AND KINTTING DESIGN PROGRAM**
STRICKENTWURFSMASCHINE, STRICKENTWURFSVERFAHREN UND STRICKENTWURFSPROGRAMM
DISPOSITIF, PROCEDE ET PROGRAMME DE CONCEPTION DE TRICOT

(30) Priority: 10.09.2007 JP 2007233612
(43) Date of publication of application: 28.07.2010
(73) Proprietor: Shima Seiki Manufacturing., Ltd., Wakayama-shi, Wakayama 641-0003 (JP)
(72) Inventor: TERAI, Koichi, Wakayama-shi Wakayama 641-0003 (JP)
(74) Representative: Carstens, Dirk Wilhelm
(86) International application number: PCT/JP2008/065955
(87) International publication number: WO 2009/034911

(56) References cited:
- JP-A- 2005 120 501
- HUA ZHONG ET AL: "Realistic and efficient rendering of free-form knitwear", JOURNAL OF VISUALIZATION AND COMPUTER ANIMATION, WILEY UK, vol. 12, no. 1, 1 February 2001 (2001-02-01), pages 13-22, XP002512447, DOI: 10.1002/VIS.241
- BAINING GUO ET AL: "Realistic rendering and animation of knitwear", IEEE TRANSACTIONS ON VISUALIZATION AND COMPUTER GRAPHICS, IEEE SERVICE CENTER, LOS ALAMITOS, CA, US, vol. 9, no. 1, 1 January 2003 (2003-01-01) , pages 43-55, XP011095508, ISSN: 1077-2626, DOI: 10.1109/TVCG.2003.1175096

## Description

The present invention relates to a knit design, and particularly to the display of a knit design locally in real time.

Patent Document 1 discloses a technology to use a knit design apparatus to design a knit product, convert a design result into knitting data, and display a simulation image of a knitted fabric knitted according to the knitting data. However, because it is difficult to simulate at high speeds, it is not easy to display, in real time, a section on the knitted fabric that one wishes to see.

Patent Document 1: Japanese Patent Application No. 2678228

Prior Art document Hua Zhong et al., "Realistic and efficient rendering of free-form knitwear", Journal of Visualization and Computer animation, Wiley UK, vol. 12, no. 1, 1 February 2001 (2001-02-01), pages 13 - 22 discloses a method for rendering knitwear on free-form surfaces, the efficiency thereof is achieved by drawing free-form knitwear as Gouraud-shaded polygons. Abilities to realistically display yarn microstructure is combined with model interactions between neghboring yarn loops.

From Baining Guo et al: "Realistic rendering and animation of knitwear", IEEE Transactions on Visualization and Computer Graphics, IEEE Service Center, Los Alamitos, CA, US, vol. 9 no. 1, 1 January 2003 (200-01-01), pages 43 - 55 a method for the animation of knitware is known which accounts for fabric characteristics particular to knitwear. Knitwear thickness and gaps within knitwear loops are represented and their effects are manifested in simulations involving knitwear layering, friction forces and knitwear deformations.

The present invention is a knit design apparatus as set forth in claim 1, and a knit design method as defined in claim 3, respectively. A preferred embodiment of the knit design apparatus is stated in claim 2.

In this invention, a knitted fabric is divided into blocks, and a block in the vicinity of a display area is extracted. As a result, a range for searching whether or not stitches are contained in the display area can be restricted to the extracted block. Whether or not the stitches are contained in the display area can be determined faster than determining whether or not all of the stitches are contained in the display area, by dividing a knitted fabric having, for example, one million stitches into approximately one hundred blocks and extracting approximately one to ten blocks.

Next, at least one reference point is provided to the stitches, and whether the reference point is contained in the display area or not is determined. This determination can be performed relatively easily. A part of the stitches whose reference point is not contained in the display area detects the stitches contained in the display area, thus a stitch in which a line connecting the starting point and the front edge collides with the display area is detected.

Because the stitches belonging to the display area can be detected at high speed by performing the steps described above, a 3D image of a part of the knitted fabric can be created and displayed.

At the same time, when the number of all of the stitches contained in the display area is high, the processing speed drops. The determination can be performed efficiently by, first, determining whether the reference point of the stitches belongs to the display area, and then determining whether the line connecting the starting point and the front edge of the stitches collides with the display area. It is inefficient to express the shape of the stitches through a row of approximately twenty points to determine whether the stitches at each point belong to the display area, and not use the line connecting the starting point and the front edge of the stitches.

A prolongation on a jacquard or the like can be displayed by displaying not only the front but also the back of the knitted fabric. Also, displaying a cross section of the knitted fabric in which the stitches are engaged with the needles of the front and back needle beds enables to check whether racking is corrected or whether the prolongation is pushed down by yarn.
Fig. 1 is a block diagram of a knit design apparatus according to an embodiment;
Fig. 2 is a block diagram of a debugging device according to the embodiment;
Fig. 3 is a block diagram of a 3D viewer according to the embodiment;
Fig. 4 is a flowchart showing a debugging algorithm according to the embodiment;
Fig. 5 is a flowchart showing a creation algorithm of a 3D viewer image according to the embodiment;
Fig. 6 is a block diagram showing a debugging program according to the embodiment;
Fig. 7 is a block diagram showing a creation program of a 3D viewer image according to the embodiment;
Fig. 8 is a diagram showing a stitch model according to the embodiment;
Fig. 9 is a perspective view showing the relationship between a cylindrical knitted fabric and a display area according to the embodiment;
Fig. 10 is a perspective view showing the display area according to the embodiment, wherein the cross section of the cylindrical knitted fabric is viewed downward;
Fig. 11 is a planar view showing the relationship between the display area and blocks of the knitted fabric according to the embodiment;
Fig. 12 is a perspective view showing the relationship between the display area and a block of the knitted fabric according to the embodiment; and
Fig. 13 is a diagram showing an example of the 3D viewer image according to the embodiment.

- 2: Knit design apparatus
- 4: Manual input
- 6: Data input/output
- 8: Color monitor
- 10: Color printer
- 12: Knit design unit
- 14: Data converter
- 16: Loop simulator
- 18: Program memory
- 20: General-purpose memory
- 22: Image memory
- 24: Debugger
- 26: Virtual knitting machine
- 28: Needle bed motion tracing unit
- 29: Racking motion tracing unit
- 30: Carrier motion tracing unit
- 32: Check table
- 34: Checker
- 36: Knitted fabric data storage unit
- 38: Flaw data storage unit
- 40: 3D viewer
- 42: Zoom processor
- 44: View point converter
- 46: Region determination unit
- 48: 3D rendering unit
- 60: Debugging program
- 61: Check table creation instruction
- 62: Motion tracing instruction
- 63: Checking instruction
- 64: Kitted fabric data storage instruction
- 65: Display instruction
- 70: 3D viewer program
- 71: Display area determination instruction
- 72: Block division instruction
- 73: Stitch list creation instruction
- 74: Display mode selection instruction
- 75: Flaw section marking instruction
- 76: 3D image creation instruction
- 80: Stitch model
- 81: Starting point
- 82: Tip end
- 91: Front knitted fabric
- 92: Back knitted fabric
- 94 to 96: Display areas
- 100: Block center
- 101 to 112: Blocks
- 120 to 122: Stitches

The best mode for carrying out the present invention is described hereinafter.

### EMBODIMENT

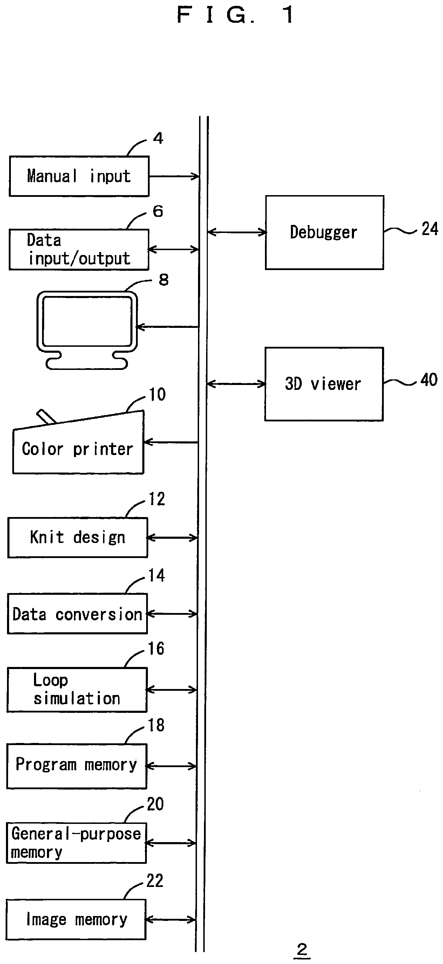

Figs. 1 to 13 show an embodiment. In Fig. 1, reference numeral 2 represents a knit design apparatus, and 4 a manual input, such as a keyboard, stylus, mouse, trackball, or joystick. A data input/output 6 inputs/outputs various data items and is configured by a disc driver or a network interface. A color monitor 8 and color printer 10 output various data items, such as design data of a knit product, simulation data of a finished knit product, and an image of a 3D viewer described hereinafter.

A knit design unit 12 designs a knit product in response to the input from the data input/output 6 or the manual input 4. A data converter 14 converts the obtained design data into a knitting data that can be knitted by a flat knitting machine. A loop simulation 16 generates an image simulating a knitted fabric to be knitted, so as to display individual stitches based on the knitting data. A program memory 18 stores various programs of the knit design apparatus 2, and particularly stores a debugging program 60 and 3D viewer program 70 that are described hereinafter. A general-purpose memory 20 stores various data items. An image memory 22 stores image data.

A debugger 24 detects a bug on the design data of the knit product and carries out debugging with the knitting data obtained by the data converter 14 as a target. A 3D viewer 40 generates a local 3D simulation image of the knitted fabric, such as a 3D simulation image of a section having the bug detected by the debugger 24 or a section designated by the manual input 4. The 3D viewer 40 is characterized in generating, in real time, the simulation image of the knitted fabric within a narrow range in response to view point conversion. Note that the loop simulator 16 generates a simulation image of the entire knitted fabric but does not necessarily respond to the view point conversion in real time.

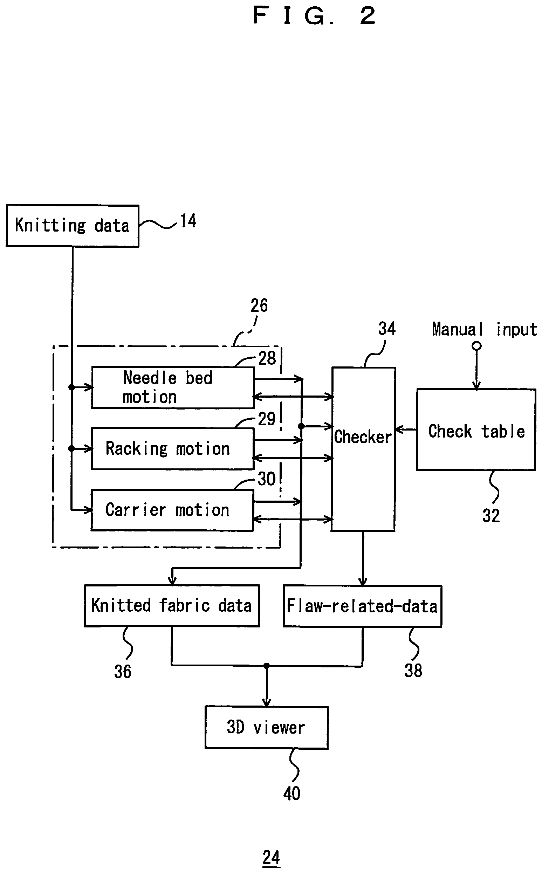

Fig. 2 shows a configuration of the debugger 24. Reference numeral 26 represents a virtual knitting machine. A needle bed motion tracing unit 28 traces the conditions of the stitches hooked on individual needles of the needle bed and the motions of the needles. The conditions of the stitches include the IDs of the held stitches, the type of the stitches, such as knit, tuck and miss stitches, IDs of superposed stitches, the connection relation among upper, lower, left and right stitches, and a cumulative racking distance, that is, accumulation of racking data obtained from a position where the stitches are formed first. The motions of the needles include knit, tuck, miss and transfer, and the condition of the stitches varies according to these motions. A racking motion tracing unit 29 stores a racking history and the current racking distance. Racking means to shift the front and back needle beds relatively in a horizontal direction. A carrier motion tracing unit 30 stores the current position and moving direction of each of a plurality of carriers supplying a knitting thread to the needle beds.

A check table 32 is a table having a description of data which relates to the motions of the needles, racking, and the movement of the carriers and becomes a bug. The data of the check table 32 is supplied from, for example, the debugging program 60, and which part of the data is considered as a bug is designated based on manual input. In addition, the check table 32 stores only a minimum amount of bugs as standard, and a bug is added thereto by means of manual input. A checker 34 uses the check table 32 to check the condition of the stitches hooked on the needles, the motions of the needles, the racking motions, and the motions of the carriers, and then detects a bug. The detected bug is stored in a flaw data storage unit 38.

The characteristics of the bugs that are stored in the check table 32 as standard are as follows:
a: Transfer is performed using the needles holding two or at least three stitches: the stitches can be dropped from the needles easily in the course of the transfer;
b: A yarn over or a tuck is formed using an end of the knitted fabric, and the next stitch forms a stitch on the yarn over or tuck: the yarn over or tuck is released;
c: The cumulative racking distance of the stitches is equal to or more than a predetermined distance: even when each racking distance is within an allowable range, the stitches are moved significantly by accumulating the racking distances, which could cause yarn cutting;
d: The same stitches are transferred at least a predetermined number of times: this could cause yarn cutting;
e: When pressing off the stitches from the needles, there is a stitch connected adjacent to the stitches pressed off on the same needle bed. For example, the stitches adjacent to each other on the same needle bed are connected by the yarn. These stitches are pressed off from the needle: this could be a design error; and
f: Vertically connected stitches are shifted horizontally more than a predetermined number of times: this could cause yarn cutting.

In these operations, appropriate selection of a yarn and knitting conditions can prevent the occurrence of troubles and might produce an intentional design that is not a bug. In such a case, instead of automatically correcting the detected bug, it is preferred to display the detected bug and allow a user to correct the design data. The bugs of the paragraphs "b" and "f' can be detected by checking the stitches hooked on the needles and the stitches knitted at the end below the former stitches.

The flaw data storage unit 38 stores data describing, for example, what kind of bug exists on a certain stitch. The flaw data storage unit 38 also stores information indicating what kind of flaw is caused at a certain knitting state. The needle bed motion tracing unit 28 traces the condition of the needles of the needle beds in the virtual knitting machine 26. As a result, the types and positions of the stitches knitted by the virtual knitting machine 26 and the connection relation among the surrounding stitches can be found out and stored in a knitted fabric data storage unit 36. The stitch arrangement obtained here is constituted by two sides of the front knitted fabric and the back knitted fabric. Each of these sides is sectioned vertically and horizontally in a grid-like pattern, and a starting point and front edge of a stitch are provided at each intersection of the grids. The front edge is at the same position as a base point of an upper stitch. Instead of designating the positions of the stitches based on the intersections of the grids, a 3D coordinate of the base point or front edge of each stitch may be stored. The base point indicates the position where each stitch starts, and the front edge indicates the position where the stitch ends. These data can be held in any ways. Among the bugs, there is a bug that cannot be detected unless lower knitted stitches are checked. The data of the knitting data storage unit 36 are also read by the checker 34. The flaw data or knitted fabric data is supplied to the 3D viewer 40, and a 3D image displaying, for example, the flaw data is created.

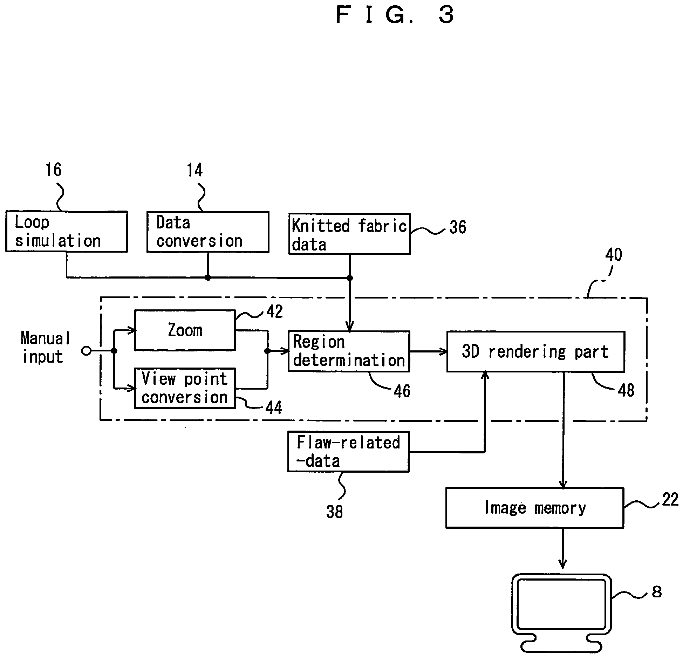

Fig. 3 shows a configuration of the 3D viewer 40. The 3D viewer 40 uses a 3D arrangement of the stitches obtained by the knitted fabric data storage unit 36, a 3D arrangement of the stitches obtained by the loop simulator 16, and data that is obtained by converting the knitting data obtained by the data converter 14 into a stitch arrangement of the front and back knitted fabrics. Reference numeral 42 is a zoom processor for determining a display area by reducing/enlarging an image. A view point converter 44 moves the display area in response to view point conversion. The zoom processor 42 and the view point converter 44 are operated by a manual input and display a 3D image, such as an image in which the knitted fabric is disposed on a flat surface, an image of the cross section of the knitted fabric, and an image of the knitted fabric viewed obliquely. A region determination unit 46 extracts stitches contained in the display area, from the stitches stored in the knitted fabric data storage unit 36. A 3D rendering unit 48 displays the stitches of the display area three-dimensionally, and marks these stitches on a flaw section in accordance with the data of the flaw data storage unit 38. This image does not have to be rendered. The created image is stored in the image memory 22 and output to the color monitor 8.

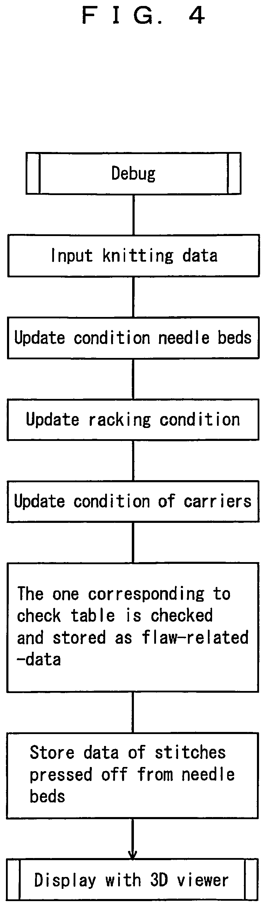

Fig. 4 shows a debugging algorithm. The knitting data is input, and consequently the condition of the stitches hooked on the needles of the needle beds, the racking condition, and the condition of the carriers are updated for each knitting operation. The data corresponding to the check table are checked in relation to these conditions and changes thereof. The data corresponding to the check table are stored as the flaw data, and the data of the stitches pressed off from the needle beds are stored in the knitted fabric data storage unit 36.

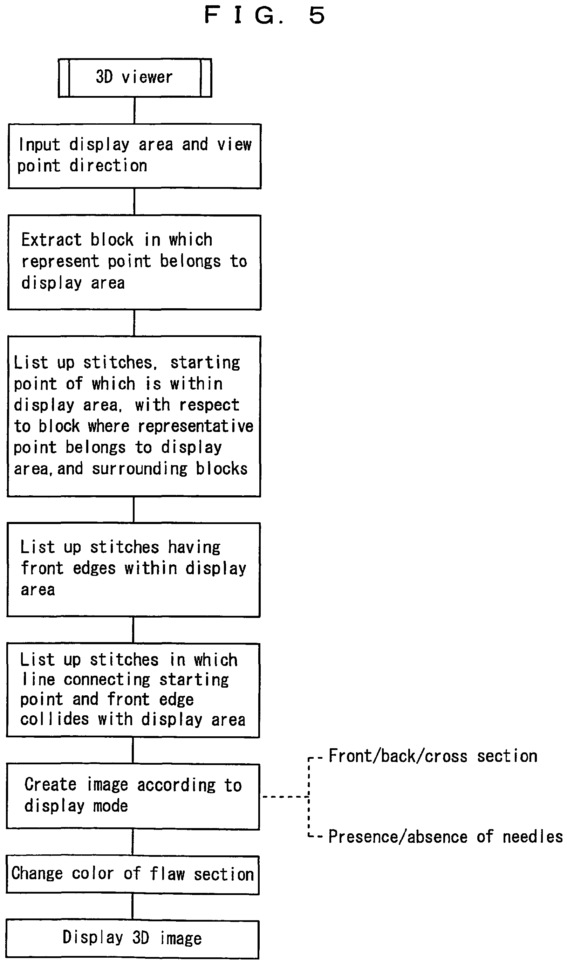

Fig. 5 shows the processing performed by the 3D viewer. An object of the processing performed by the 3D viewer is to create a list of the stitches of the display area at high speeds so that a local 3D image can be created in real time. When displaying the flaw data, the flaw data is disposed near the center of the display area, for example. Furthermore, manual input can be utilized to input the center of the display area, the degree of image reduction/enlargement, the view point direction, and the display mode. The target knitted fabric is in the form of a cylinder, for example, and specifically a knitted fabric obtained by joining bodies and sleeves together without sewing them. The display area therefore includes a display area of the front knitted fabric and the display area of the back knitted fabric. The stitches that have the starting points in these display areas or the stitches in each of which the line connecting the starting point and the front edge collides with the display area are displayed on the 3D image.

The 3D arrangement of the stitches is found from the knitted fabric data storage unit 36 and the like. The arrangement of the stitches is divided into a plurality of blocks. The size of each block is, for example, 128 stitches × 128 stitches. Although the blocks are fixed in this embodiment, a block may be generated each time in accordance with the display area. The reason why the arrangement of the stitches is divided into blocks is to restrict the search range of the stitches contained in the display area.

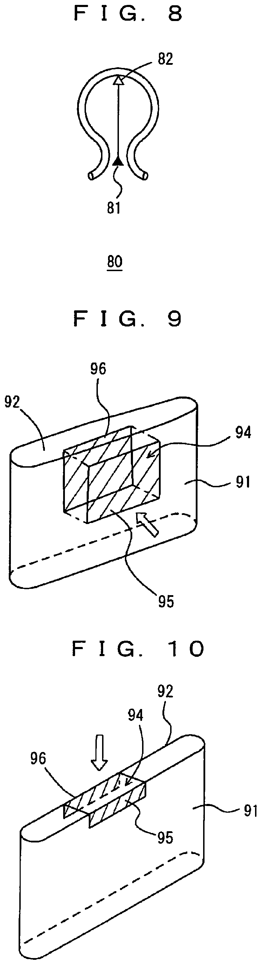

A block of stitches whose center is contained in the display area, and a block of stitches adjacent to the former block that has the starting point contained in the display area are listed. The meaning of the starting point is shown in a stitch model 80 of Fig. 8. Reference numeral 81 represents the starting point and 82 the front edge of the stitches. Whether the stitches are contained in the display area is determined based on whether a line connecting the starting point 81 to the front edge 82 collides with the display area or not. It should be noted that the position of the starting point 81 is stored in the knitted fabric data storage unit 36. The position of the front edge 82 is the position of the starting point of the next stitch (upper stitch) supported by the stitch model 80 in Fig. 8 and determined from the connection relation among the stitches. The positions of the starting point 81 and the front edge 82 may be defined with a certain degree of accuracy so that the stitches belonging to display area can be determined.

Fig. 9 shows the relationship between the cylindrical knitted fabric and the display area. Reference numeral 91 represents the front knitted fabric, 92 the back knitted fabric, 94 the overall display area for the front knitted fabric and the back knitted fabric, 95 a display area for the front knitted fabric, and 96 a display area for the back knitted fabric. When displaying the front of the front knitted fabric, the direction of the view point is as shown by the white arrow in the diagram. When displaying the back of the front knitted fabric, it is displayed with the view point that looks at the front knitted fabric side from the inside of the cylinder. A prolongation of the like that extends through the back of the knitted fabric can be displayed with jacquards.

Fig. 10 shows a display area in which the cross section of the knitted fabric is viewed downward, wherein the white arrow is the direction of the view point. The height directions of the display areas 94, 95 are relatively narrower than those shown in Fig. 9, and a prolongation between the display areas 94, 95 is also displayed. When displaying the needles, a state in which the stitches at the upper ends of each of the display areas are engaged with the needles is displayed.

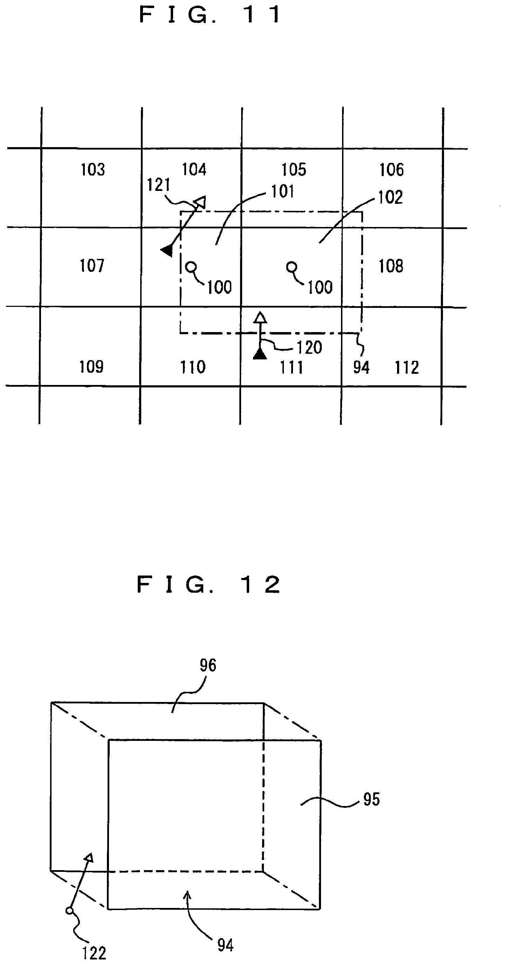

Fig. 11 shows the relationship between the display area and the blocks. The knitted fabric is divided into the plurality of blocks, each of which contains stitches in a size of, for example, approximately 16 stitches × 16 stitches to 256 stitches × 256 stitches, or preferably approximately 128 stitches × 128 stitches. A representative point 100 is defined for each block, and blocks 101, 102 having the representative point 100 belonging to the display area are extracted. The extracted blocks 101, 102 and the surrounding blocks, which are adjacent blocks 103 to 112, are obtained as display area processing targets. Then, determination is made on each of the stitches of the blocks 101 to 112 as to whether the starting point is contained in the display area, then whether the front edge is contained in the display area, and finally whether the line connecting the starting point and the front edge collides with any of the four sides of the display area. Any of these stitches is obtained as a display target. Reference numeral 120 represents a stitch that does not have the base point in the display area but has the front edge in the display area, while reference numeral 121 represents a stitch that does not have the base point or the front edge in the display area but has the line connecting them in the display area.

As long as the 3D coordinate of the four apexes of the display area is known, it is easily to determine whether the starting point or the front edge is contained in the display area or not. Next, by obtaining a straight line which is the extension of the ling connecting the starting point and the front edge of the stitches, and the intersection of straight lines obtained by extending the four sides of the display area, collision between the line with the display area can be detected based on the presence of any of the intersections on the line and within the sides of the display area. In this way, the stitches within the display area are listed. Note that, in the block where the representative point is located in the vicinity of the center of the display area, all of the stitches might be considered existing within the display area. Furthermore, a process for determining the position of the front edge may be omitted, and a process for determining the position of the base point may be performed, followed by the collision determination. The range of the surrounding blocks is defined based on the relative size between each block and the display area. The range of the surrounding blocks can extend to the adjacent block or be between this adjacent block and the block outside thereof.

Fig. 12 shows an example of the prolongation. A stitch 122 has its base point in the front knitted fabric and front edge in the back knitted fabric. The base point does not belong to the display area, but the front edge belongs to the display area 96. In this case as well, the collision determination can extract the stitch 122. Creating the list of the stitches contained in the display area in this manner enables to select the display mode in which the knitted fabric is displayed in a planar view/horizontal cross-sectional view, or in which the knitted fabric is displayed with/without the needles of the needle beds. Note that the latter option of displaying the knitted fabric with the needles of the needle beds may not be provided. Next, a process for changing the color is carried out on the stitches of the flaw section, and thus obtained 3D image is displayed on the color monitor.

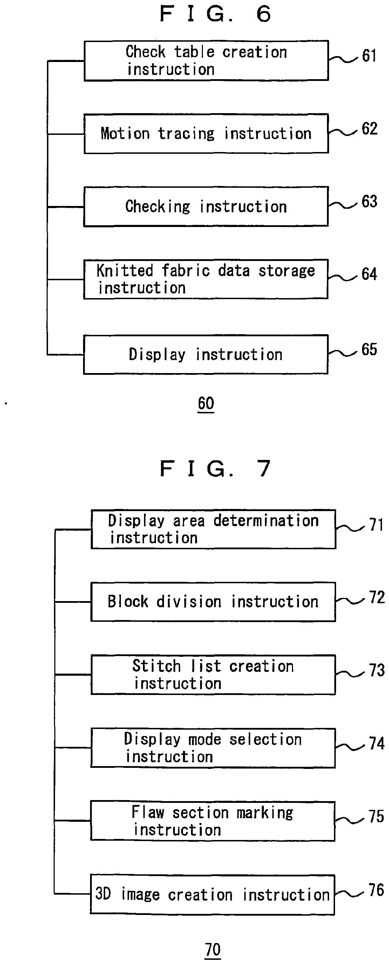

Fig. 6 shows the debugging program 60, and Fig. 7 the 3D viewer program 70. These programs are stored by means of a carrier wave or within a CD-ROM or other storage medium and supplied to the data input/output 6. In Fig. 6, reference numeral 61 represents a check table creation instruction to create a table for checking flaws, in the knit design apparatus configured by a computer. A motion tracing instruction 62 creates the virtual knitting machine 26 within the knit design apparatus, and traces the condition of the needles of the needle beds, the racking condition, and the condition of the carriers. A checking instruction 63 causes the knit design apparatus to execute checking of the condition of the needles of the needle beds, the racking condition and the condition of the carriers by means of the data of the table of the check table creation instruction 61, and then to store the result of detecting flaws. A knitted fabric data storage instruction 64 stores the data of the stitches pressed off from the needles of the needle beds, in the memory of the knit design apparatus. A display instruction 65 turns over the detection result to the 3D viewer program 70 or the like and displays the detection result on the monitor.

Fig. 7 shows the 3D viewer program 70. Reference numeral 71 represents a display area determination instruction to determine the display area in response to an input of the view point or a zoom command, and a block division instruction 72 divides the knitted fabric data into the plurality of blocks. Note that the blocks may be divided every time the display area is designated. Each of the blocks may have a fixed size in relation to the knitted fabric data, and therefore the display area may or may not be changed. A stitch list creation instruction 73 creates a list of the stitches contained in the display area. A display mode selection instruction 74 receives a selected display mode indicating whether the knitted fabric is displayed in a planar view or cross-sectional view, and performs a process associated with it. A flaw section marking instruction 75 marks a section having flaw knitting data. A 3D image creation instruction 76 creates a 3D image so that a flaw section can be marked on the listed stitches.

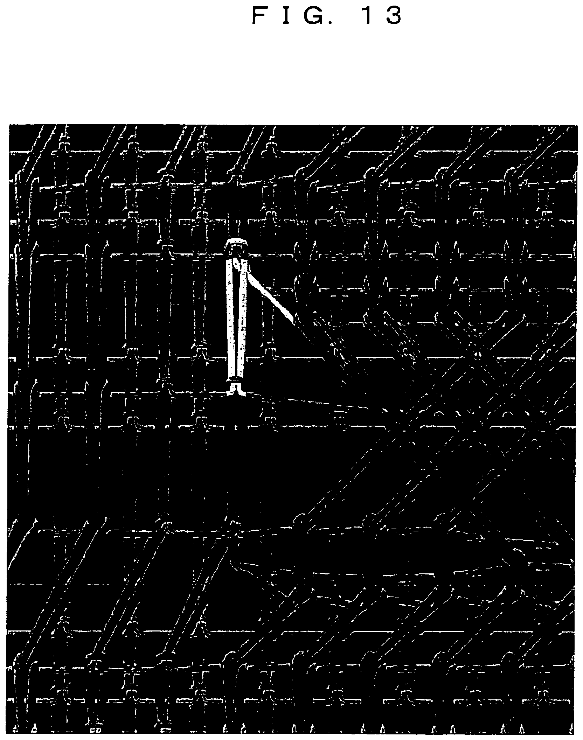

Fig. 13 shows an example of a display image of the 3D viewer, wherein a stitch whose knitting data has a bug is distinguished from other stitches. A flaw here is that a double stitch is transferred and the adjacent stitch on the left is a single stitch and moreover only the stitch with a flaw is a double stitch, as the result, it becomes difficult to be noticed easily. Transferring the double stitch might cause a stitch to be dropped from the needles during the transfer, depending on the yarn used. The 3D viewer can reduce/enlarge the display area, convert the view point, and display the knitted fabric in a planar view or a cross-sectional view so that the user can understand the configuration of the knitted fabric immediately. When changing the design data, the design data can be changed by inputting a new design from the 3D viewer. Or, the design data is changed by moving the design from the 3D viewer to another screen on the color monitor.

The present embodiment can attain the following effects.
(1) The bugs of the design data of the knit product obtained by the flat knitting machine can be detected automatically. This can prevent troubles from occurring during the mass production, and simplify the work of manually checking a large number of stitches.
(2) Because the 3D viewer can determine the display area at high speeds, a 3D image of a required section can be provided in real time. Therefore, the design can be understood or changed easily.

In order to determine the range of stitches to be displayed, in the present embodiment a block where the representative point 100 belongs to the display area is extracted, and then whether stitches of the surrounding blocks are contained in the display range or not is determined. However, for example, the following process is possible as well. First, the knitted fabric is divided into a plurality of blocks with reference to the center of the display area. The size of each block is constant, for example. One block is made smaller than the display area, while nine blocks are made larger than the display area. The center of the central block is disposed in the vicinity of the center of the display area. As a result, the entire central block is contained in the display area. Next, blocks adjacent to the central block are detected. That is, a block whose base point is contained in the display area and a block whose base point is not contained in the display area and line connecting the base point and the front edge collides with the four sides of the display area are detected.

## Claims

1. A knit design apparatus (2) comprising a virtual knitting machine (26) with a needle bed motion tracing unit (28) and comprising a knitted fabric data storage unit (36), for creating knitting data to knit a knitted fabric using a flat knitting machine having at least a pair of front and back needle beds, and displaying a simulation image of the knitting data on a color monitor (8), the needle bed motion tracing unit (28) tracing the conditions of the stitches hooked on individual needles of the needle beds and the motions of the needles, and the knitted fabric data storage unit (36) storing the types and positions of the stitches knitted by the virtual knitting machine (26) and the found out connection relation among the surrounding stitches, the knit design apparatus (2) comprising
a knit design unit (12) that designs a knit product and a data converter (14) that converts the design data obtained from the knit design unit (12) into knitting data;
the knit design apparatus (2) being **characterized by**:
means for obtaining and storing an arrangement of stitches (120 to 122) of the simulation image;
means for dividing the stored arrangement of stitches (120 to 122) into a plurality of blocks (101 to 112);
means for extracting, from the plurality of blocks (101 to 112), at least one block the center thereof is disposed in the vicinity of the center of a simulation image display area (94 to 96) of the color monitor (8);
means for detecting, from the stitches (120 to 122) of the extracted block, stitches having reference points contained in the display area (94 to 96) wherein at least one reference point was provided to the stitches;
means for detecting, from the stitches (120 to 122) of the extracted block, stitches of which lines connecting starting points (81) and tip ends (82) collide with the edges of the display area (94 to 96); and
means for creating a 3D image of the stitches having the reference points contained in the display area (94 to 96) and of the stitches of which the line connecting the starting points (81) and the tip ends (82) collide with the edges of the display area (94 to 96), and displaying the 3D image on the color monitor (8).

2. The knit design apparatus (2) according to claim 1, **characterized in that** said means for creating a 3D image may enlarge and reduce the 3D image and may display an image of stitches held by needles in the front and back needle beds in a cross section of the knitted fabric, an image of a front view of the knitted fabric, and an image of a rear view of the knitted fabric as the 3D image.

3. A knit design method using a virtual knitting machine (26) with a needle bed motion tracing unit (28) and a knitted fabric data storage unit (36) for creating knitting data for knitting a knitted fabric using a flat knitting machine having at least a pair of front and back needle beds, and displaying a simulation image of the knitting data on a color monitor (8) wherein the conditions of the stitches hooked on individual needles of the needle beds and the motions of the needles are traced by the needle bed motion tracing unit (28) and wherein the types and positions of the stitches knitted by the virtual knitting machine (26) and the found out connection relation among the surrounding stitches are stored in the knitted fabric data storage unit (36), the knitting design method comprising
a knit design unit (12) that designs a knit product and a data converter (14) that converts the design data obtained from the knit design unit (12) into knitting data;
the knit design method being **characterized in** performing the following steps in order of a to e:
a: obtaining and storing an arrangement of stitches (120 to 122) of the simulation image;
b: dividing the stored arrangement of stitches (120 to 122) into a plurality of blocks (101 to 112);
c: extracting, from the plurality of blocks (101 to 112), at least one block the center thereof is in the vicinity of the center of a simulation image display area (94 to 96) of the color monitor 8;
d: detecting, from the stitches (120 to 122) of the extracted block, stitches having reference points contained in the display area (94 to 96), wherein at least one reference point was provided to the stitches, and stitches of which lines connecting starting points (81) and tip ends (82) collide with edges of the display area (94 to 96); and
e: creating a 3D image of the stitches having the reference points contained in the display area (94 to 96) and of the stitches of which lines connecting the starting points (81) and the tip ends (82) collide with the edges of the display area (94 to 96), and displaying the 3D image on the color monitor (8).

## Patentansprüche

1. Strickmustervorrichtung (2), die eine virtuelle Strickmaschine (26) mit einer Nadelbettbewegung-Verfolgungseinheit (28) und eine Gestrickdaten-Speichereinheit (36) für das Erzeugen von Strickdaten für das Stricken eines Gestricks unter Verwendung einer Flachstrickmaschine, die wenigstens ein Paar von vorderen und hinteren Nadelbetten aufweist, und zum Anzeigen eines Simulationsbilds der Strickdaten an einem Farbmonitor (8) umfasst, wobei die Nadelbettbewegung-Verfolgungseinheit (28) die Zustände der an einzelnen Nadeln der Nadelbetten eingehakten Maschen und die Bewegungen der Nadeln verfolgt, und wobei die Gestrickdaten-Speichereinheit (36) die Typen und Positionen der durch die virtuelle Strickmaschine (26) gestrickten Maschen und die herausgefundene Verbindungsbeziehung innerhalb der umgebenden Maschen speichert, wobei die Strickmustervorrichtung (2) umfasst:
eine Strickmustereinheit (12), die ein Strickprodukt entwirft, und einen Datenwandler (14), der die von der Strickmustereinheit (12) erhaltenen Musterdaten zu Strickdaten wandelt,
wobei die Strickmustervorrichtung (2) **gekennzeichnet ist durch**:
Mittel zum Erhalten und Speichern einer Anordnung von Maschen (120 bis 122) des Simulationsbilds,
Mittel zum Teilen der gespeicherten Anordnung von Maschen (120 bis 122) in eine Vielzahl von Blöcken (101 bis 112)
Mittel zum Extrahieren, aus der Vielzahl von Blöcken (101 bis 112), wenigstens eines Blocks, dessen Mitte in Nachbarschaft zu der Mitte eines Simulationsbild-Anzeigebereichs (94, bis 96) des Farbmonitors (8) angeordnet ist,
Mittel zum Erfassen, aus den Maschen (120 bis 122) des extrahierten Blocks, von Maschen mit Referenzpunkten, die in dem Anzeigebereich (94 bis 96) enthalten sind, wobei wenigstens ein Referenzpunkt für die Maschen vorgesehen war,
Mittel zum Erfassen, aus den Maschen (120 bis 122) des extrahierten Blocks, von Maschen, bei denen Linien, die Startpunkte (81) mit Enden (82) verbinden, mit den Rändern des Anzeigebereichs (94 bis 96) zusammenfallen, und
Mittel zum Erzeugen eines 3D-Bilds der Maschen, die die in dem Anzeigebereich (94 bis 96) enthaltenen Referenzpunkte aufweisen, und der Maschen, bei denen die Linien, die die Startpunkte (81) und die Enden (82) verbinden, mit den Rändern des Anzeigebereichs (94 bis 96) zusammenfallen, und Anzeigen des 3D-Bilds an dem Farbmonitor (8).

2. Strickmsutervorrichtung (2) nach Anspruch 1, **dadurch gekennzeichnet, dass** die Mittel zum Erzeugen eines 3D-Bilds das 3D-Bild vergrößern und verkleinern können und ein Bild von durch Nadeln in den vorderen und hinteren Nadelbetten gehaltenen Maschen in einem Querschnitt des Gestricks, ein Bild einer Vorderansicht des Gestricks und ein Bild einer Rückansicht des Gestricks als das 3D-Bild anzeigen können.

3. Strickmusterverfahren, das eine virtuelle Strickmaschine (26) mit einer Nadelbettbewegung-Verfolgungseinheit (28) und eine Gestrickdaten-Speichereinheit (36) für das Erzeugen von Strickdaten für das Stricken eines Gestricks unter Verwendung einer Flachstrickmaschine, die wenigstens ein Paar von vorderen und hinteren Nadelbetten aufweist, und zum Anzeigen eines Simulationsbilds der Strickdaten an einem Farbmonitor (8) verwendet, wobei die Zustände der an einzelnen Nadeln der Nadelbetten eingehakten Maschen und die Bewegungen der Nadeln durch die Nadelbettbewegung-Verfolgungseinheit (28) verfolgt werden und wobei die Typen und Positionen der durch die virtuelle Strickmaschine (26) gestrickten Maschen und die herausgefundene Verbindungsbeziehung innerhalb der umgebenden Maschen in der Gestrickdaten-Speichereinheit (36) gespeichert werden, wobei das Strickmusterverfahren umfasst:
eine Strickmustereinheit (12), die ein Strickprodukt entwirft, und einen Datenwandler (14), der die von der Strickmustereinheit (12) erhaltenen Musterdaten zu Strickdaten wandelt,
wobei das Strickmusterverfahren **gekennzeichnet ist durch** das Durchführen der folgenden Schritte in der Reihenfolge a bis e:
a: Erhalten und Speichern einer Anordnung von Maschen (120 bis 122) des Simulationsbilds,
b: Teilen der gespeicherten Anordnung von Maschen (120 bis 122) in eine Vielzahl von Blöcken (101 bis 112)
c: Extrahieren, aus der Vielzahl von Blöcken (101 bis 112), wenigstens eines Blocks, dessen Mitte in Nachbarschaft zu der Mitte eines Simulationsbild-Anzeigebereichs (94, bis 96) des Farbmonitors (8) angeordnet ist,
d: Erfassen, aus den Maschen (120 bis 122) des extrahierten Blocks, von Maschen mit Referenzpunkten, die in dem Anzeigebereich (94 bis 96) enthalten sind, wobei wenigstens ein Referenzpunkt für die Maschen vorgesehen war, und von Maschen, bei denen Linien, die Startpunkte (81) mit Enden (82) verbinden, mit den Rändern des Anzeigebereichs (94 bis 96) zusammenfallen, und
e: Erzeugen eines 3D-Bilds der Maschen, die die in dem Anzeigebereich (94 bis 96) enthaltenen Referenzpunkte aufweisen, und der Maschen, bei denen die Linien, die die Startpunkte (81) und die Enden (82) verbinden, mit den Rändern des Anzeigebereichs (94 bis 96) zusammenfallen, und Anzeigen des 3D-Bilds an dem Farbmonitor (8).

## Revendications

1. Appareil de conception de tricot (2) comprenant une machine à tricoter virtuelle (26) ayant une unité de tracé de déplacement de lits d'aiguilles (28) et comprenant une unité de stockage de données de tricot (36), pour créer des données de tricot pour le tricotage d'un tricot en utilisant une machine à tricoter à plat ayant au moins une paire de lits d'aiguilles avant et arrière, et pour afficher une image de simulation des données de tricot sur un écran couleur (8), l'unité de tracé de déplacement de lits d'aiguilles (28) traçant les conditions des mailles crochetées par des aiguilles individuelles des lits d'aiguilles et les déplacements des aiguilles, et l'unité de stockage des données de tricot (36) stockant les types et positions des mailles tricotées par la machine à tricoter virtuelle (26) et la relation de connexion déterminée entre les mailles environnantes, l'appareil de conception de tricot (2) comprenant :
une unité de conception de tricot (12) qui conçoit un tricot et un convertisseur de données (14) qui convertit les données de conception obtenues par l'unité de conception de tricot (12) en données de tricotage ;
l'appareil de conception de tricot (2) étant **caractérisé par** :
des moyens pour obtenir et stocker un agencement de mailles (120 à 122) de l'image de simulation ;
des moyens pour diviser l'agencement stocké de mailles (120 à 122) en une pluralité de blocs (101 à 112) ;
des moyens pour extraire, parmi la pluralité de blocs (101 à 112), au moins un bloc dont le centre est placé à proximité du centre d'une zone d'affichage d'une image de simulation (94 à 96) de l'écran couleur (8) ;
des moyens pour détecter, à partir des mailles (120 à 122) du bloc extrait, des mailles ayant des points de référence contenus dans la zone d'affichage (94 à 96) dans lesquels au moins un point de référence a été fourni aux mailles ;
des moyens pour détecter, parmi les mailles (120 à 122) du bloc extrait, des mailles dont des lignes reliant des points de départ (81) et des extrémités de pointe (82) entrent en contact avec les bordures de la zone d'affichage (94 à 96) ; et
des moyens pour créer une image 3D des mailles ayant les points de référence contenus dans la zone d'affichage (94 à 96) et des mailles dont la ligne reliant les points de départ (81) et les extrémités de pointe (82) entrent en contact avec les bordures de la zone d'affichage (94 à 96), et pour afficher l'image 3D sur l'écran couleur (8).

2. Appareil de conception de tricot (2) selon la revendication 1, **caractérisé en ce que** lesdits moyens pour créer une image 3D peuvent agrandir et réduire l'image 3D et peuvent afficher une image des mailles maintenues par des aiguilles dans les lits d'aiguilles avant et arrière en coupe transversale du tricot, une image d'une vue de face du tricot et une image d'une vue arrière du tricot sous forme d'image 3D.

3. Procédé de création de tricot en utilisant une machine à tricoter virtuelle (26) ayant une unité de tracé de déplacement de lits d'aiguilles (28) et une unité de stockage de données de tricot (36) pour créer des données de tricotage pour tricoter un tricot en utilisant une machine à tricoter à plat ayant au moins une paire de lits d'aiguilles avant et arrière, et pour afficher une image de simulation des données de tricotage sur un écran couleur (8) dans lequel les conditions des mailles crochetées par des aiguilles individuelles des lits d'aiguilles et les déplacements des aiguilles sont tracés par l'unité de tracé de déplacement de lits d'aiguilles (28) et dans lequel les types et positions des mailles tricotées par la machine à tricoter virtuelle (26) et la relation de connexion déterminée entre les mailles environnantes sont stockés dans l'unité de stockage de données de tricot (36), le procédé de conception de tricot comprenant
une unité de conception de tricot (12) qui conçoit un tricot et un convertisseur de données (14) qui convertit les données de conception obtenues par l'unité de conception de tricot (12) en données de tricotage ;
le procédé de conception de tricot étant **caractérisé par** la mise en oeuvre des étapes suivantes a à e :
a : l'obtention et le stockage d'un agencement de mailles (120 à 122) de l'image de simulation ;
b : la division de l'agencement stocké de mailles (120 à 122) en une pluralité de blocs (101 à 112) ;
c : l'extraction, dans la pluralité de blocs (101 à 112), d'au moins un bloc dont le centre est situé à proximité du centre d'une zone d'affichage d'une image de simulation (94 à 96) de l'écran couleur (8) ;
d : la détection, parmi les mailles (120 à 122) du bloc extrait, des mailles ayant des points de référence contenus dans la zone d'affichage (94 à 96), dans lesquels au moins un point de référence a été fourni aux mailles, et des mailles dont des lignes reliant des points de départ (81) et des extrémités de pointe (82) entrent en contact avec les bordures de la zone d'affichage (94 à 96) ; et
e : la création d'une image 3D des mailles ayant les points de référence contenus dans la zone d'affichage (94 à 96) et des mailles dont des lignes reliant les points de départ (81) et les extrémités de pointe (82) entrent en contact avec les bordures de la zone d'affichage (94 à 96), et l'affichage de l'image 3D sur l'écran couleur (8).
